# EUROPÄISCHE PATENTSCHRIFT

(11) **EP 3 894 871 B1**
(45) Veröffentlichungstag und Bekanntmachung des Hinweises auf die Patenterteilung: **15.12.2021**
(21) Anmeldenummer: 20709531.6
(22) Anmeldetag: 03.03.2020
(51) Int. Cl.: G01N 35/00

(54) **LABORAUTOMAT UND VERFAHREN ZUR BEARBEITUNG EINER PROBE**
AUTOMATIC LABORATORY MACHINE AND METHOD FOR PROCESSING A SAMPLE
MACHINE DE LABORATOIRE AUTOMATIQUE ET PROCÉDÉ DE TRAITEMENT D'UN ÉCHANTILLON

(43) Veröffentlichungstag der Anmeldung: 20.10.2021
(73) Patentinhaber: Hombrechtikon Systems Engineering AG, 8634 Hombrechtikon (CH)
(72) Erfinder: TIEDTKE, Hans-Jürgen, 53227 Bonn (DE); QUINTEL, Harald, 8266 Steckborn (CH); LUTZE, Konstantin, 8713 Uerikon (CH)
(74) Vertreter: IPS Irsch AG
(86) Internationale Anmeldenummer: PCT/EP2020/055532
(87) Internationale Veröffentlichungsnummer: WO 2021/175414

(56) Entgegenhaltungen:
- WO-A1-2014/127379
- WO-A1-2015/030368
- WO-A1-2020/173867

## Beschreibung

Die Erfindung betrifft einen Laborautomaten zur Bearbeitung einer Probe sowie ein Verfahren zur Bearbeitung einer Probe gemäss dem Oberbegriff der unabhängigen Ansprüche.

Bei der Verarbeitung einer Vielzahl von Proben muss eine Vielzahl von Bearbeitungsschritten durchgeführt werden. Hierzu werden in der Regel Laborautomaten verwendet, da ein präzises Pipettieren von Reagenzien in und aus Behältern wie Mikrotitrierplatten gewährleistet werden muss.

Die Laborautomaten des Standes der Technik umfassen hierbei in der Regel einen Behandlungsraum, in welchen die Proben in Mikrotitrierplatten (oder andere Behälter) eingebracht werden; eine Pipettiervorrichtung zur Durchführung der Bearbeitungsschritte; eine Bewegungseinrichtung zur Bewegung der Pipettiervorrichtung im Behandlungsraum und eine elektronische Steuereinrichtung, welche die Pipettiervorrichtung und andere Teile des Laborautomat zur Durchführung der Bearbeitungsschritte steuert und anweist.

Durch die Laborautomaten wird also ein automatisierter Probenverarbeitungsprozess mit erhöhter Effizienz und verbessertem Durchsatz gewährleistet.

Oft weisen die Laborautomaten auch integrierte optische Detektionsvorrichtungen zur Analyse der Proben auf. Die Detektionsvorrichtungen sind stationär im Laborautomat angeordnet und Proben werden mittels eines Greifers zur Detektionsvorrichtung transportiert und dort analysiert, wodurch die Flexibilität der bekannten Vorrichtungen jedoch begrenzt ist.

Besonders bevorzugt werden Laborautomaten in der Biochemie zur Verarbeitung von biologischen Proben, wie Biomolekülen (zum Beispiel DNS; RNS,...) verwendet.

Insbesondere bei Biomolekülen ist die Lumineszenz Spektroskopie eine wichtige Analysemethode, bei welcher das Emissionslicht, welches auf Basis einer Photonenabsorption der Biomoleküle entsteht, ausgewertet wird.

An grosse Biomoleküle können hierfür durch eine Fluoreszenzmarkierung fluoreszierende chemische Gruppen angehängt werden, die dann als Marker für dieses Biomolekül dienen.

Unter Fluoreszenz ist dabei die kurzzeitige, spontane Emission von Licht zu verstehen, welche bei einem Übergang eines elektronisch angeregten Systems zurück in einen Zustand niedrigerer Energie erfolgt. Fluoreszenz ist also eine Form der Lumineszenz, bei der die Anregung durch Absorption von Photonen (Photolumineszenz) erfolgt. Formal stellt die Fluoreszenz somit die Umkehr der Adsorption von Licht dar, bei welcher eine Desaktivierung angeregter Elektronenzustände durch Re-Emission der Anregungsenergie als Strahlung erfolgt.

Bei vielen Prozessen spielt insbesondere die Konzentration der fluiden Proben (also der relevanten Moleküle in Lösung) für die weitere Verarbeitung eine Rolle, welche insbesondere durch die Fluoreszenz-Spektroskopie einfach zu bestimmen ist.

Laborautomaten mit einer Analyseeinheit mit Energiespeichermedium sind aus der WO 2020/173867 A1 bekannt. Laborautomaten mit einer bewegbaren optischen Analyseeinheit sind aus der WO 2014/127379 A1 bekannt.

Zusammenfassend liegen die wesentlichen Nachteile des Standes der Technik an der mangelnden Flexibilität der Systeme.

Aufgabe der Erfindung ist es daher einen Laborautomaten und ein Verfahren zur Bearbeitung einer Probe bereitzustellen, welche die aus dem Stand der Technik bekannten nachteiligen Wirkungen vermeiden, insbesondere einen hoch flexiblen Laborautomaten mit unabhängigen Komponenten bereitzustellen.

Die Aufgabe wird durch einen Laborautomaten zur Bearbeitung einer Probe sowie ein Verfahren zur Bearbeitung einer Probe mit den Merkmalen der unabhängigen Ansprüche gelöst.

Die abhängigen Ansprüche beziehen sich auf besonders vorteilhafte Ausführungsformen der Erfindung.

Erfindungsgemäss wird ein Laborautomat zur Bearbeitung einer Probe umfassend einen Behandlungsraum zur Aufnahme der Probe, eine in mindestens einer ersten Raumrichtung des Behandlungsraumes bewegbar angeordnete Bewegungseinrichtung, eine in dem Behandlungsraum angeordnete Analyseeinheit zur Analyse der Probe, welche durch die Bewegungseinrichtung aufnehmbar und mittels der Bewegungseinrichtung zur Probe bewegbar ist und eine elektronische Steuereinrichtung, welche mit der Bewegungseinrichtung und der Analyseeinheit signalverbunden ist, vorgeschlagen.

Bei einem besonders bevorzugten Ausführungsbeispiel ist in dem Behandlungsraum ausserdem eine Probenbearbeitungsvorrichtung zur Durchführung mindestens eines Bearbeitungsschrittes an der Probe angeordnet. Die Probenbearbeitungsvorrichtung ist dabei in der Bewegungsvorrichtung umfasst, insbesondere an der Bewegungsvorrichtung angeordnet. So kann die Probenbearbeitungsvorrichtung mittels der Bewegungseinrichtung in der ersten Raumrichtung durch den Behandlungsraum bewegt werden. Dabei umfasst die Probenbearbeitungsvorrichtung insbesondere ein Aufnahmeelement zur Aufnahme der Analyseeinheit, sodass die Analyseeinheit im Betriebszustand mittels der Bewegungseinrichtung zu der Probe bewegbar ist. Auch die Probenbearbeitungsvorrichtung ist mit der Steuereinheit signalverbunden.

Die Analyseeinheit ist als eine kabellose Analyseeinheit mit einem Energiespeichermedium ausgestaltet und der Laborautomat umfasst eine in dem Behandlungsraum angeordnete Ladestation zur Lagerung der Analyseeinheit und zum Aufladen des Energiespeichermediums. Die Analyseeinheit kann dann aufgrund des Energiespeichermediums ohne ein Netzkabel (permanenten Stromanschluss) betrieben werden.

Erfindungsgemäss wird weiter ein Verfahren zur Bearbeitung der Probe in dem erfindungsgemässen Laborautomat vorgeschlagen. Die Probe wird in den Behandlungsraum eingebracht. Die Analyseeinheit wird mittels der Bewegungsvorrichtung aufgenommen und mittels der Bewegungseinrichtung durch den Behandlungsraum zu der Probe bewegt. Dann wird die Probe mittels der Analyseeinheit analysiert.

Die Analyseeinheit ist ausserdem als eine kabellose Detektionsvorrichtung umfassend eine Strahlungsquelle zur Bestrahlung der Probe mit einer Primärstrahlung und einen Detektor zur Aufnahme einer von der Probe stammenden Sekundärstrahlung, ausgestaltet.

Ist die Analyseeinheit als die kabellose Detektionsvorrichtung ausgestaltet, wird diese aus der Ladestation mittels des Aufnahmeelementes der Probenbearbeitungsvorrichtung aufgenommen und mittels der Bewegungseinrichtung (zumindest) in der ersten Raumrichtung durch den Behandlungsraum von der Ladestation zu der Probe bewegt. Anschliessend wird die Probe mittels der Detektionsvorrichtung analysiert.

In der Praxis ist im Behandlungsraum in der Regel ein Behälter zur Aufnahme der Proben angeordnet. Insbesondere kann der Behälter eine Mikrotiterplatte sein, wobei die Mikrotiterplatte eine Vielzahl von Vertiefungen zur Aufnahme der Proben (beziehungsweise verschiedener Proben umfasst).

Im Rahmen dieser Erfindung kann unter dem Begriff «Probe» insbesondere eine fluide Probe verstanden werden, welche eine Flüssigkeit mit Substanzen wie Biomolekülen (unter anderem DNS, RNS, Nukleinsäuren, Proteine, Zellen und Zellbestandteile, Monomere) oder anderen chemischen Substanzen umfasst. Eine Flüssigkeit kann im Rahmen der Erfindung ein geeignetes Lösungsmittel sein.

In Ausführung der Erfindung umfasst die Detektionsvorrichtung die Strahlungsquelle zur Bestrahlung der Probe mit der Primärstrahlung und den Detektor zur Aufnahme der von der Probe stammenden Sekundärstrahlung umfassen. Die Strahlungsquelle erzeugt also insbesondere eine elektromagnetische Strahlung (die Primärstrahlung). Die Sekundärstrahlung ist insbesondere eine von der Probe emittierte elektromagnetischen Sekundärstrahlung, welche Sekundärstrahlung durch eine Wechselwirkung der Primärstrahlung mit der Probe induziert ist.

Hierbei wird als Primärstrahlung besonders bevorzugt UV/Vis-Strahlung, insbesondere im Wellenlängenbereich von 190-800nm, im speziellen 365-720nm verwendet. Als Detektor eignet sich hierbei insbesondere eine Diode, insbesondere eine Silizium-Photodiode oder eine Vakuumphotodiode. Als Strahlungsquellen können ein Laser, eine Deuteriumlampe, eine Wolframlampe, eine Halogenlampe oder eine LED (Leuchtdiode) verwendet werden.

In der Praxis kann die Detektionsvorrichtung auch eine Vielzahl von Detektoren und / oder Strahlungsquellen umfassen. Die Strahlungsquellen können dabei verschiedene Wellenlängen oder Wellenlängenbereiche als Primärstrahlung ausstrahlen. Besonders bevorzugt ist hierbei die Verwendung von zwei Strahlungsquellen, welche als eine erste Strahlungsquelle (vorzugsweise erste LED) mit einer ersten Wellenlänge (z.B. 350-400nm) und eine zweite Strahlungsquelle (vorzugsweise zweite LED) mit einer zweiten Wellenlänge (z.B. 700-750nm) ausgestaltet sind. Ist eine Vielzahl von Strahlungsquellen vorhanden, kann die Analyse konfokal erfolgen. Die Strahlengänge der Primärstrahlung von den verschiedenen Strahlungsquellen werden also auf einen gemeinsamen Brennpunkt in der fluiden Probe gerichtet.

Die Detektionsvorrichtung kann also ein Photometer, insbesondere ein Spektrometer, im speziellen ein Fluorometer / Fluoreszenzphotometer sein. Das Fluorometer misst die Parameter der Fluoreszenz der fluiden Probe: Intensität und Wellenlängenverteilung des Emissionsspektrums (der Sekundärstrahlung) nach Anregung durch die Primärstrahlung.

Als Messprinzip wird im Rahmen der Erfindung besonders bevorzugt die Fluoreszenz-Spektroskopie verwendet, wobei die Strahlungsquelle Primärstrahlung im UV/Vis-Bereich erzeugt und die Fluoreszenzemission der fluiden Probe mittels des Detektors erfasst wird.

Prinzipiell kann auch eine Adsorption der Probe gemessen werden, indem die Strahlungsquelle nicht Teil der Detektionsvorrichtung ist und am Behälter angeordnet ist. Da durch eine derartige Anordnung der Aufbau der Vorrichtung verkompliziert wird, ist die Analyse der Emission, insbesondere der Fluoreszenzemission bevorzugt, sodass Strahlungsquelle und Detektor in die Detektionsvorrichtung integriert sein können.

Alternativ kann die Analyseeinheit als Infrarotphotometer zur optischen Temperaturmessung und / oder ein pH-Meter und / oder eine Kamera und / oder ein Ultraschallsensor und / oder ein Laser und / oder ein Laserinterferometer und / oder eine UVC-Einheit (bevorzugt LED mit 260-280nm) zur lokalen Dekontamination des Behandlungsraumes ausgestaltet sein. Der Gegenstand der Erfindung wird zwar anhand des bevorzugten Ausführungsbeispiels der optischen Analyse genauer beschrieben, ist jedoch nicht darauf beschränkt. Zum Bespiel kann die Kamera zum Scannen von Barcodes im Behandlungsraum oder zur Inventarisierung eines Workdecks im Behandlungsraum verwendet werden.

Bei einem besonders bevorzugten Ausführungsbeispiel kann die Probenbearbeitungsvorrichtung als eine Pipettiervorrichtung zur Aufnahme und Abgabe eines Fluids ausgestaltet sein und das Aufnahmeelement zur Aufnahme einer Pipettenspitze ausgestaltet sein.

Insbesondere kann das Aufnahmeelement einen Kopf zur Aufnahme der Pipettenspitze umfassen, wobei die Detektionsvorrichtung einen zu einer Form des Kopfes korrespondieren Anschluss umfasst, sodass die Detektionsvorrichtung im Betriebszustand durch die Probenbearbeitungsvorrichtung aufnehmbar ist, indem der Kopf in korrespondieren Anschluss eingesteckt wird.

Der Kopf kann dabei als ein Spitzenkonus zur Aufnahme einer Pipettenspitze ausgestaltet sein, wobei die Form des Anschlusses zu der Form des Spitzenkonus korrespondiert (also insbesondere einfach eine runde Öffnung). Selbstverständlich kann der Kopf auch eine andere passende Form besitzen, wie zum Beispiel die Form eines Quaders. Da Pipettenspitzen in der Regel eine runde Öffnung aufweisen, ist jedoch der Kopf bevorzugt als der Spitzenkonus ausgestaltet, welcher in Richtung der aufzunehmenden Pipettenspitze (beziehungsweise der Detektionsvorrichtung) zuläuft, sodass die Pipettenspitze (beziehungsweise die Detektionsvorrichtung) einfacher aufgenommen werden kann.

In einer besonders bevorzugten Ausführungsform kann das Aufnahmeelement einen Kern umfassen, an welchem Kern der Spitzenkonus (oder bei nicht bestimmter Form auch der Kopf) befestigt ist, wobei eine Hülse derart beweglich entlang einer Konusachse des Spitzenkonus, um den Kern angeordnet ist, dass die Detektionsvorrichtung im Betriebszustand durch eine Bewegung der Hülse entlang der Konusachse in Richtung des Spitzenkonus ausstossbar ist. Durch einen Druck, welcher bei dieser Bewegung von der Hülse auf die Detektionsvorrichtung (oder eine Pipettenspitze) ausgeübt wird, kann diese ausgestossen werden.

Alternativ kann an der Bewegungseinrichtung ein Roboterarm mit einem Greifer angeordnet sein, durch welchen unter anderem die Analyseeinheit aufgenommen und transportiert werden kann.

Selbstverständlich kann das Aufnahmeelement auch eine andere Ausstossvorrichtung umfassen, welche im Betriebszustand derart auf die in dem Aufnahmeelement aufgenommene Detektionsvorrichtung einwirken kann, dass die Detektionsvorrichtung in die Ladestation ausstossbar ist.

Prinzipiell kann das Energiespeichermedium ein Kondensator und / oder ein Akkumulator sein. Durch das Energiespeichermedium wird gewährleistet, dass die Detektionsvorrichtung «kabellos» verwendet werden kann, also zumindest zeitweise ohne eine externe Stromverbindung betrieben werden kann. So kann die Detektionsvorrichtung ohne Stromkabel flexibel im Laborautomat bewegt werden, um die fluiden Proben an verschiedenen Stellen des Behandlungsraums oder zu verschiedenen Verfahrensschritten zu analysieren und kann anschliessend in die Ladestation eingebracht werden, um dort gelagert zu werden und das Energiespeichermedium für weitere Analysen aufzuladen.

Prinzipiell kann der Laborautomat auch mehrere erfindungsgemässe (kabellose) Detektionsvorrichtungen umfassen, sodass je nach Bedarf Detektionsvorrichtungen mit z.B. verschiedenen Strahlungsquellen verwendet werden können.

Dass die elektronische Steuereinrichtung mit der Probenbearbeitungsvorrichtung, der Bewegungseinrichtung und der Detektionsvorrichtung signalverbunden ist, bedeutet dass die Steuereinrichtung im Betriebszustand Steuersignale zur Durchführung der Bearbeitungsschritte an die Probenbearbeitungsvorrichtung, die Bewegungseinrichtung und die Detektionsvorrichtung sendet. Ausserdem können auch Signale von der Probenbearbeitungsvorrichtung, der Bewegungseinrichtung und der Detektionsvorrichtung empfangen werden.

Die Signalverbindung kann bei der Detektionsvorrichtung und / oder der Probenbearbeitungsvorrichtung und / oder der Bewegungseinrichtung über eine Kabelverbindung oder kabellos erfolgen. Bei der Detektionsvorrichtung ist die Signalverbindung jedoch bevorzugt kabellos. Bei der kabellosen Signalverbindung erfolgt die Daten- / Signalübertragung über freien Raum (Luft bzw. Vakuum) als Übertragungsmedium. Die Übertragung kann durch gerichtete oder ungerichtete elektromagnetische Wellen erfolgen, wobei ein Bereich des zu verwendenden Frequenzbands je nach Anwendung und verwendeter Technik von wenigen Hertz (Niederfrequenz) bis hin zu mehreren hundert Terahertz (sichtbares Licht) variieren kann. Bevorzugt wird dabei Bluetooth oder WLAN verwendet. So kann nicht nur die Detektionsvorrichtung durch die Steuereinrichtung gesteuert werden, sondern nach der Analyse der fluiden Proben können die gemessenen Daten zur Auswertung an die Steuereinrichtung übertragen werden, um zum Beispiel eine Konzentration der fluiden Probe vor der weiteren Verarbeitung zu bestimmen.

Selbstverständlich ist es bevorzugt, dass die Bewegungseinrichtung in einer zweiten, zur der ersten Raumrichtung orthogonalen Raumrichtung des Behandlungsraumes sowie in einer dritten, zur der ersten Raumrichtung und der zweiten Raumrichtung orthogonalen, Raumrichtung des Behandlungsraumes bewegbar ist, sodass die Detektionsvorrichtung flexibel im gesamten Laborautomat bewegt werden kann. Die Bewegungseinrichtung wird bevorzugt über einen Elektromotor wie einen Servomotor angetrieben und kann sich beispielsweise als frei beweglicher Arm oder über Schienen bewegen.

Im erfindungsgemässen Verfahren (beziehungsweise im Betriebszustand) kann so die Detektionsvorrichtung mittels der Bewegungseinrichtung in allen Raumrichtung (im Rahmen der Anmeldung erste, zweite und dritte Raumrichtung) durch den Behandlungsraum bewegt werden. Insbesondere kann nach Analysieren der Probe eine Bewegung der Detektionsvorrichtung von der Probe zu der Ladestation erfolgen, eine Bewegung der Detektionsvorrichtung von einer ersten Probe zu einer zweiten Probe erfolgen und eine Bewegung der Detektionsvorrichtung von der Ladestation zu der Probe erfolgen. Ist die Probenbearbeitungsvorrichtung eine Pipettiervorrichtung erfolgt mittels der Pipettiervorrichtung und der Bewegungseinrichtung nicht nur die Bewegung der Detektionsvorrichtung, sondern es können auch verschiedene Fluide (wie auf die fluide Probe) durch den Behandlungsraum transportiert werden, wofür insbesondere Pipettenspitzen auf die Pipettiervorrichtung aufgebracht werden. So können in verschiedenen Bearbeitungsschritten Fluide pipettiert werden. Im Rahmen dieser Anmeldung ist jedoch auch die Analyse mittels der Detektionsvorrichtung ein Bearbeitungsschritt.

Der Vorteil liegt hierbei insbesondere darin, dass bekannte Laborautomaten einfach zu einem erfindungsgemässen Laborautomaten aufgerüstet werden können, da die bereits vorhandenen Pipettiervorrichtungen als Probenbearbeitungsvorrichtung mit entsprechender Bewegungseinrichtung verwendet werden können. Vorhandene Systeme können also nachgerüstet werden, indem eine erfindungsgemässe Detektionsvorrichtung mit Ladestation integriert wird.

Vorangehend wurde viele verschiedene Massnahmen zur Ausgestaltung des Laborautomat beschrieben. Bei einem in der Praxis bevorzugten Ausführungsbeispiel können diese Massnahmen wie folgt kombiniert sein.

Die fluide Probe umfasst Biomoleküle und im Behandlungsraum ist die Mikrotiterplatte zur Aufnahme der fluiden Proben angeordnet. Die Detektionsvorrichtung umfasst zwei Strahlungsquellen zur Bestrahlung der fluiden Probe mit der Primärstrahlung und den Detektor (bevorzugt Silizium-Photodiode) zur Aufnahme einer von der fluiden Probe stammenden Sekundärstrahlung. Die Primärstrahlung wird als UV/Vis-Strahlung durch die zwei Strahlungsquellen (bevorzugt LEDs) in zwei verschiedenen Wellenlängen (wie zum Beispiel 360nm und 720nm) erzeugt. Die Detektionsvorrichtung ist als ein Fluorometer ausgestaltet. Die (durch den Detektor erfassbare) Sekundärstrahlung entspricht also der Fluoreszenzemission der fluiden Probe. Die Probenbearbeitungsvorrichtung ist als eine Pipettiervorrichtung zur Aufnahme und Abgabe eines Fluids (wie auch der fluiden Probe) ausgestaltet und das Aufnahmeelement umfasst den Spitzenkonus, wobei die Detektionsvorrichtung den zu einer Form des Spitzenkonus korrespondieren Anschluss umfasst. Die Bewegungseinrichtung ist in allen Raumrichtungen des Behandlungsraumes bewegbar.

Im Folgenden wird die Erfindung anhand von Ausführungsbeispielen unter Bezugnahme auf die Zeichnungen näher erläutert. Die Zeichnungen zeigen:
- Fig. 1: eine schematische Darstellung eines erfindungsgemässen Laborautomat;
- Fig. 2: eine schematische Darstellung eines weiteren Ausführungsbeispiels eines erfindungsgemässen Laborautomat;
- Fig. 3: eine schematische Darstellung der Verwendung der erfindungsgemässen Detektionsvorrichtung;
- Fig. 4: eine schematische Darstellung der Bestrahlung einer fluiden Probe;
- Fig. 5: eine schematische Darstellung eines erfindungsgemässen Aufnahmeelementes;
- Fig. 6: eine weitere schematische Darstellung eines Spitzenkonus gemäss Fig. 5.

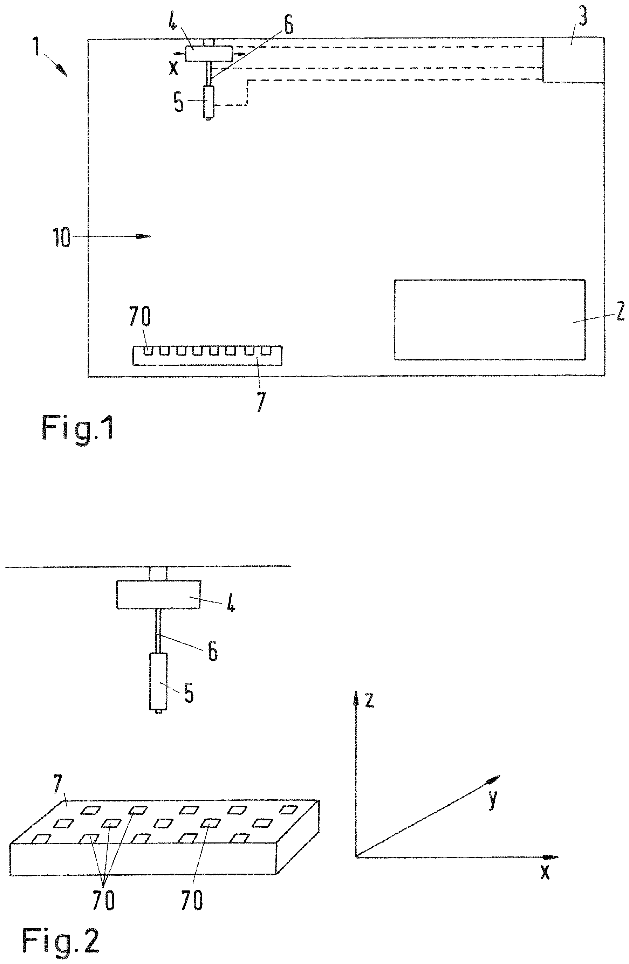

Fig. 1 zeigt eine schematische Darstellung eines erfindungsgemässen Laborautomat 1.

Der Laborautomat 1 zur Bearbeitung einer fluiden Probe umfasst einen Behandlungsraum 10 zur Aufnahme der fluiden Probe und eine in dem Behandlungsraum 10 angeordnete Probenbearbeitungsvorrichtung 6 zur Durchführung mindestens eines Bearbeitungsschrittes (zumindest Analyse der fluiden Probe) an der fluiden Probe.

Ausserdem ist eine Bewegungseinrichtung 4 im Behandlungsraum 10 angeordnet. Die Bewegungseinrichtung 4 ist zumindest in einer ersten Raumrichtung x des Behandlungsraumes 10 bewegbar. Dabei ist die Bewegungseinrichtung 4 derart mit der Probenbearbeitungsvorrichtung 6 verbunden (also die Probenbearbeitungsvorrichtung 6 derart in der Bewegungseinrichtung 4 umfasst), dass die Probenbearbeitungsvorrichtung 6 mittels der Bewegungseinrichtung 4 in der ersten Raumrichtung x durch den Behandlungsraum 10 bewegbar ist.

Eine Detektionsvorrichtung 5 mit einem integrierten Energiespeichermedium zur Analyse der fluiden Probe ist reversibel an der Probenbearbeitungsvorrichtung 6 befestigt. Hierbei ist die Detektionsvorrichtung 5 eine kabellose Detektionsvorrichtung 5.

In dem Behandlungsraum ist ausserdem eine Ladestation 2 zur Lagerung der Detektionsvorrichtung 5 und zum Aufladen des Energiespeichermediums angeordnet. So kann die Detektionsvorrichtung 5 nach Analyse einer fluiden Probe von der Probenbearbeitungsvorrichtung 6 entfernt werden und in die Ladestation 2 eingebracht werden.

Das Energiespeichermedium ist bevorzugt ein Kondensator und / oder ein Akkumulator, welcher in der Ladestation 2 aufgeladen werden kann. Durch das Energiespeichermedium wird die kabellose Verwendung der Detektionsvorrichtung 5 gewährleistet, da diese zumindest zeitweise ohne eine externe Stromverbindung betrieben werden kann.

Hieraus ergibt sich der Vorteil, dass die Detektionsvorrichtung 5 ohne ein störendes Verbindungskabel flexibel im Behandlungsraum 10 des Laborautomat 1 bewegt werden kann.

Ausserdem umfasst der Laborautomat 1 eine elektronische Steuereinrichtung 3, welche mit der Probenbearbeitungsvorrichtung 6, der Bewegungseinrichtung 4 und der Detektionsvorrichtung 5 signalverbunden ist. Die Signalverbindung wird hierbei über die gestrichelten Linien angedeutet.

Die Steuereinrichtung 3 kann im Betriebszustand also Steuersignale zur Durchführung verschiedener Bearbeitungsschritte an die Probenbearbeitungsvorrichtung 6, die Bewegungseinrichtung 4 und die Detektionsvorrichtung 5 senden. Selbstverständlich kann die Steuereinrichtung 3 auch Signale von der Probenbearbeitungsvorrichtung 6, der Bewegungseinrichtung 4 und der Detektionsvorrichtung 5 empfangen.

Die Signalverbindung erfolgt bei der Probenbearbeitungsvorrichtung 6 und / oder der Bewegungseinrichtung 4 über eine Kabelverbindung zur Steuereinheit 3. Bei der Detektionsvorrichtung 5 ist die Signalverbindung kabellos. Die Daten- / Signalübertragung erfolgt also über einen freien Raum (Luft bzw. Vakuum) als Übertragungsmedium. Zur Übertragung wird elektromagnetische Strahlung wie Bluetooth oder WLAN verwendet.

Die Detektionsvorrichtung 5 wird durch die Steuereinrichtung 3 gesteuert, sodass Analysen an einer vorgebbaren Vertiefung 70 eines im Behandlungsraum 10 angeordneten Behälters 7 durchgeführt werden. Nach der Analyse der fluiden Proben werden die gemessenen Daten zur Auswertung von der Detektionsvorrichtung 5 an die Steuereinrichtung 3 übertragen.

Fig. 2 zeigt eine schematische Darstellung eines weiteren Ausführungsbeispiels eines erfindungsgemässen Laborautomat 1 mit einem äquivalenten Aufbau wie der Laborautomat 1 gemäss Fig. 1.

Die Bewegungseinrichtung 4 ist jedoch zusätzlich in einer zweiten, zur der ersten Raumrichtung x orthogonalen Raumrichtung y des Behandlungsraumes sowie in einer dritten, zur der ersten Raumrichtung x und der zweiten Raumrichtung y orthogonalen, Raumrichtung z des Behandlungsraumes bewegbar, sodass die Detektionsvorrichtung 5 flexibel zu den verschiedenen Vertiefungen 70 des Behälters 7, welcher als Mikrotiterplatte ausgestaltet ist, bewegt werden kann.

Im Betriebszustand ist die Detektionsvorrichtung 5 also mittels der Bewegungseinrichtung 4 in allen Raumrichtung x, y, z durch den Behandlungsraum 10 bewegbar. Insbesondere kann nach Analysieren der fluiden Probe eine Bewegung der Detektionsvorrichtung 5 von der fluiden Probe zu der Ladestation erfolgen. Ausserdem kann eine Bewegung der Detektionsvorrichtung 5 von einer ersten fluiden Probe zu einer zweiten fluiden Probe erfolgen und eine Bewegung der Detektionsvorrichtung 5 von der Ladestation zu der fluiden Probe erfolgen.

Ist die Probenbearbeitungsvorrichtung 6 eine Pipettiervorrichtung 6 erfolgt mittels der Pipettiervorrichtung 6 und der Bewegungseinrichtung 4 nicht nur die Bewegung der Detektionsvorrichtung 5, sondern es können auch verschiedene Fluide (wie auf die fluide Probe) durch den Behandlungsraum 10 transportiert werden.

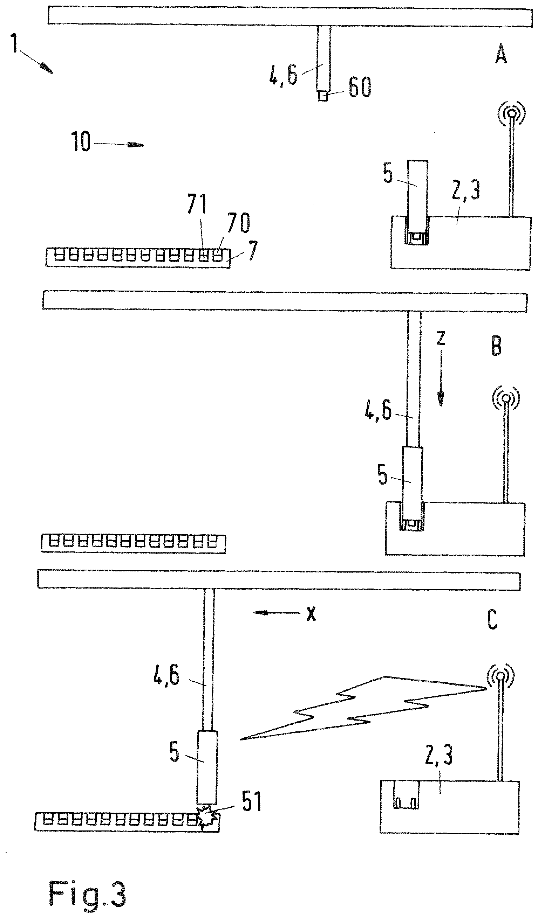

Fig. 3 zeigt eine schematische Darstellung der Verwendung der erfindungsgemässen Detektionsvorrichtung 5 im erfindungsgemässen Laborautomat 1. Der Laborautomat 1 gemäss Fig. 3 weist einen äquivalenten Aufbau wie der Laborautomat 1 gemäss Fig. 1 auf, jedoch ist die Bewegungseinrichtung 4 in allen Raumrichtungen bewegbar. Ausserdem ist die Probenbearbeitungsvorrichtung 6 in die Bewegungseinrichtung 4 integriert, sowie die Ladestation 2 in die Steuereinheit 3 integriert.

Die Probenbearbeitungsvorrichtung 6 umfasst ein Aufnahmeelement 60 zur Aufnahme der Detektionsvorrichtung 5.

In einem Zustand A befindet sich die Detektionsvorrichtung 5 in der Ladestation 2 und das Energiespeichermedium der Detektionsvorrichtung 5 wird geladen.

Im Zustand B bewegt sich die Probenbearbeitungsvorrichtung 6 mit ihrer Aufnahme 60 entlang der dritten Raumrichtung z in Richtung der Detektionsvorrichtung 5, sodass die Detektionsvorrichtung 5 mittels der Aufnahme 60 von der Probenbearbeitungsvorrichtung 6 aufgenommen wird.

Im Zustand C wird die Detektionsvorrichtung 5 mit der Bewegungseinrichtung 4 in der ersten Raumrichtung x von der Ladestation 2 zur der fluiden Probe 71 transportiert, welche sich in der Vertiefung 70 des Behälters 7 befindet und die fluide Probe 71 mittels der Detektionsvorrichtung 5 analysiert. Besonders vorteilhaft wird die fluide Probe 71 über eine Öffnung der Vertiefung 70 analysiert / bestrahlt, ohne dass die Primärstrahlung 51 durch ein Material des Behälters 7 geführt werden muss, um von der Strahlungsquelle zur fluiden Probe 71 zu gelangen.

Hierfür umfasst die Detektionsvorrichtung 5 eine integrierte Strahlungsquelle zur Bestrahlung der fluiden Probe mit einer Primärstrahlung 51 und einen integrierten Detektor zur Aufnahme einer von der fluiden Probe stammenden Sekundärstrahlung.

Die Strahlungsquelle erzeugt also die Primärstrahlung als eine elektromagnetische Strahlung im UV/Vis-Bereich, insbesondere im Wellenlängenbereich von 190-800nm, im speziellen von 365-720nm. Die Sekundärstrahlung ist insbesondere eine von der fluiden Probe emittierte elektromagnetischen Sekundärstrahlung, welche Sekundärstrahlung durch eine Wechselwirkung der Primärstrahlung mit der fluiden Probe induziert ist.

Der Detektor ist bevorzugt als eine Silizium-Photodiode ausgestaltet und die Strahlungsquellen als eine LED (Leuchtdiode).

Die Detektionsvorrichtung 5 ist als ein Fluorometer zur Messung der Fluoreszenzintensität ausgestaltet. Das Fluorometer 5 misst die Intensität und Wellenlängenverteilung des Emissionsspektrums (Sekundärstrahlung) der fluiden Probe 71 nach Anregung durch die Primärstrahlung 51.

Bevorzugt umfasst die fluide Probe 71 Biomoleküle und ein Lösungsmittel. Die Fluoreszenzintensität kann dabei zur Bestimmung der Konzentration der Biomoleküle verwendet werden. Hierbei könnte auf ein Fluoreszenzmarker für die Biomoleküle verwendet werden.

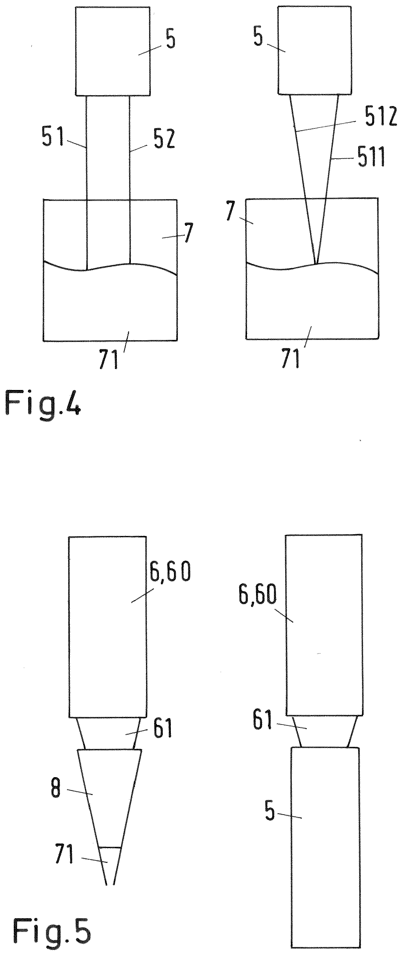

Fig. 4 zeigt eine schematische Darstellung der Bestrahlung der fluiden Probe 71. Hierfür wird wie zu Fig. 3 beschrieben ein Fluorometer 5 als Detektionsvorrichtung 5 verwendet.

Die Primärstrahlung 51 wird von oben durch eine Öffnung des Behälters 7 direkt auf die fluide Probe 71 eingestrahlt.

Die Sekundärstrahlung 52 wird von dem in der Detektionsvorrichtung integrierten Detektor aufgenommen. Die Sekundärstrahlung 52 ist die von der fluiden Probe 71 emittierte elektromagnetischen Sekundärstrahlung 52, welche Sekundärstrahlung 52 durch eine Wechselwirkung der Primärstrahlung 51 mit der fluiden Probe induziert ist. Die Sekundärstrahlung 52 entspricht der Fluoreszenzemission der fluiden Probe 71.

Die Detektionsvorrichtung 5 kann zwei Strahlungsquellen zur Bestrahlung der fluiden Probe mit Primärstrahlung in zwei verschiedenen Wellenlängen im UV/Vis-Bereich umfassen. Durch die Verwendung von zwei Strahlungsquellen, wird durch eine erste Strahlungsquelle eine erste Primärstrahlung 511 mit einer ersten Wellenlänge (z.B. 350-400nm) und durch eine zweite Strahlungsquelle (vorzugsweise zweite LED) eine zweite Primärstrahlung 512 mit einer zweiten Wellenlänge (z.B. 700-750nm) erzeugt. Die Analyse der fluiden Probe erfolgt konfokal, die Strahlengänge der Primärstrahlung 511, 512 von den verschiedenen Strahlungsquellen sind auf einen gemeinsamen Brennpunkt in der fluiden Probe 71 gerichtet.

Fig. 5 zeigt eine schematische Darstellung eines erfindungsgemässen Aufnahmeelementes 60.

Die Probenbearbeitungsvorrichtung 6 ist als eine Pipettiervorrichtung 6 zur Aufnahme und Abgabe eines Fluids ausgestaltet und das Aufnahmeelement 60 umfasst einen Kopf 61 zur Aufnahme einer Pipettenspitze 8, wobei die Detektionsvorrichtung 5 einen zu einer Form des Kopfes 61 korrespondieren Anschluss umfasst, sodass die Detektionsvorrichtung 5 im Betriebszustand durch die Probenbearbeitungsvorrichtung 6 aufnehmbar ist, indem der Kopf 61 in den korrespondieren Anschluss eingesteckt wird.

Der Kopf 61 ist dabei als ein Spitzenkonus 61 zur Aufnahme einer Pipettenspitze 8 ausgestaltet, wobei die Form des Anschlusses zur der des Spitzenkonus 61 korrespondiert.

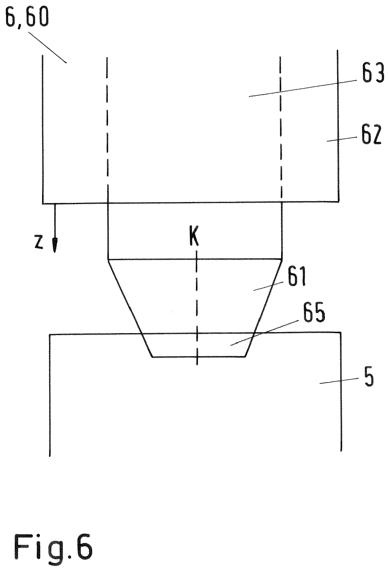

Fig. 6 zeigt eine weitere schematische Darstellung des Spitzenkonus gemäss Fig. 5.

Der Spitzenkonus 61 ist derart ausgestaltet, dass er in Richtung der des Anschlusses 65 zuläuft, sodass die Detektionsvorrichtung 5 einfacher aufgenommen werden kann.

Das Aufnahmeelement 60 umfasst einen Kern 63, an welchem Kern 63 der Spitzenkonus 61 befestigt ist, wobei eine Hülse 62 derart beweglich entlang einer Konusachse des Spitzenkonus, um den Kern angeordnet ist, dass die Detektionsvorrichtung im Betriebszustand durch eine Bewegung der Hülse entlang der Konusachse K in Richtung des Spitzenkonus 61 (in Raumrichtung z) ausstossbar ist. Durch einen Druck, welcher bei dieser Bewegung von der Hülse 63 auf die Detektionsvorrichtung 5 ausgeübt wird, kann diese ausgestossen werden. So kann die Detektionsvorrichtung 5 wieder in die Ladestation eingebracht werden.

## Patentansprüche

1. Laborautomat zur Bearbeitung einer Probe (71) umfassend einen Behandlungsraum (10) zur Aufnahme der Probe (71);
eine in mindestens einer ersten Raumrichtung (x) des Behandlungsraumes (10) bewegbar angeordnete Bewegungseinrichtung (4);
eine in dem Behandlungsraum (10) angeordnete Analyseeinheit (5) zur Analyse der Probe (71), welche durch die Bewegungseinrichtung (4) aufnehmbar und mittels der Bewegungseinrichtung (4) zur Probe (71) bewegbar ist; und
eine elektronische Steuereinrichtung (3), welche mit der Bewegungseinrichtung (4) und der Analyseeinheit (5) signalverbunden ist,
wobei die Analyseeinheit (5) als eine Detektionsvorrichtung (5) umfassend eine Strahlungsquelle zur Bestrahlung der Probe (71) mit einer Primärstrahlung (51) und einen Detektor zur Aufnahme einer von der Probe (71) stammenden Sekundärstrahlung (52), ausgestaltet ist, **dadurch gekennzeichnet, dass** die Analyseeinheit (5) als eine kabellose Analyseeinheit (5) mit einem Energiespeichermedium ausgestaltet ist und der Laborautomat (1) eine in dem Behandlungsraum (10) angeordnete Ladestation (2) zur Lagerung der Analyseeinheit (5) und zum Aufladen des Energiespeichermediums umfasst.

2. Laborautomat nach Anspruch 1, wobei die Bewegungseinrichtung (4) eine Probenbearbeitungsvorrichtung (6) zur Durchführung mindestens eines Bearbeitungsschrittes an der Probe (71) umfasst, wobei die Probenbearbeitungsvorrichtung (6) ein Aufnahmeelement (60) zur Aufnahme der Analyseeinheit (5) umfasst, sodass die Analyseeinheit (5) im Betriebszustand mittels der Bewegungseinrichtung (4) zu der Probe (71) bewegbar ist.

3. Laborautomat nach Anspruch 1, wobei der Detektor eine Diode, insbesondere eine Silizium-Photodiode oder eine Vakuumphotodiode ist.

4. Laborautomat nach Anspruch 1 oder 3, wobei die Strahlungsquelle eine Deuteriumlampe, eine Wolframlampe, eine Halogenlampe oder eine LED ist.

5. Laborautomat nach einem der Ansprüche 1 bis 4, wobei die Detektionsvorrichtung (5) eine Vielzahl von Detektoren und / oder Strahlungsquellen umfasst.

6. Laborautomat nach einem der Ansprüche 1 bis 5, wobei das Energiespeichermedium ein Kondensator und / oder eine Batterie und / oder ein Akkumulator ist.

7. Laborautomat nach einem der Ansprüche 1 bis 6, wobei die Detektionsvorrichtung (5) ein Photometer, insbesondere ein Spektrometer, im speziellen ein Fluorometer ist.

8. Laborautomat nach einem der vorangehenden Ansprüche, wobei die Bewegungseinrichtung (10) in einer zweiten, zur der ersten Raumrichtung orthogonalen Raumrichtung (y) des Behandlungsraumes (10) sowie in einer dritten, zur der ersten Raumrichtung (x) und der zweiten Raumrichtung (y) orthogonalen, Raumrichtung (z) des Behandlungsraumes (10) bewegbar ist.

9. Laborautomat nach Anspruch 2, wobei die Probenbearbeitungsvorrichtung (6) als eine Pipettiervorrichtung (6) zur Aufnahme und Abgabe eines Fluids ausgestaltet ist und das Aufnahmeelement (60) zur Aufnahme einer Pipettenspitze ausgestaltet ist.

10. Verfahren zur Bearbeitung einer Probe (71) mit einem Laborautomat (1) umfassend:
a) Bereitstellen eines Laborautomat (1) nach einem der vorangehenden Ansprüche;
b) Einbringen der Probe (71) in den Behandlungsraum (10);
c) Aufnahme der Analyseeinheit (5) mittels der Bewegungsvorrichtung (4);
d) Bewegen der Analyseeinheit (5) mittels der Bewegungseinrichtung (4) durch den Behandlungsraum (10) zu der Probe (71);
e) Analysieren der Probe (71) mittels der Analyseeinheit (5).

11. Verfahren nach Anspruch 10, wobei die Bewegungseinrichtung (4) die Probenbearbeitungsvorrichtung (6) umfasst und die kabellosen Detektionsvorrichtung (5) mittels des Aufnahmeelementes (60) der Probenbearbeitungsvorrichtung (6) aufgenommen wird und mittels der Bewegungseinrichtung (4) durch den Behandlungsraum (10) von der Ladestation (2) zu der Probe (71) transportiert wird.

12. Verfahren nach Anspruch 11 umfassend Bewegen der Detektionsvorrichtung (5) mittels der Bewegungseinrichtung (4) durch den Behandlungsraum (10) von der Probe (71) zu der Ladestation (2) nach Analysieren der Probe (71).

13. Verfahren nach Anspruch 11 oder 12 umfassend Bestrahlen der Probe (71) mit einer Primärstrahlung (51) mittels einer Strahlungsquelle der Detektionsvorrichtung (5) und Aufnehmen einer von der Probe (71) stammenden Sekundärstrahlung (52) mittels eines Detektors der Detektionsvorrichtung (5).

14. Verfahren nach Anspruch 13 umfassend Bestimmung einer Konzentration der Probe (71) anhand der Sekundärstrahlung (52).

## Claims

1. An automated laboratory apparatus for processing a sample (71) comprising
a treatment chamber (10) for receiving the sample (71);
a movement device (4) arranged movably in at least one first spatial direction (x) of the treatment chamber (10);
an analysis unit (5) arranged in the treatment chamber (10) for analyzing the sample (71), which analysis unit (5) can be received by the movement device (4) and can be moved to the sample (71) by means of the movement device (4); and
an electronic control device (3) which is signal-connected to the movement device (4) and the analysis unit (5),
wherein the analysis unit (5) is designed as a detection device (5) comprising a radiation source for irradiating the sample (71) with a primary radiation (51) and a detector for receiving a secondary radiation (52) originating from the sample (71), **characterized in that** the analysis unit (5) is designed as a wireless analysis unit (5) with an energy storage device, and the automated laboratory apparatus (1) comprises a charging station (2) arranged in the treatment chamber (10) for storing the analysis unit (5) and for charging the energy storage device.

2. An automated laboratory apparatus according to claim 1, wherein the movement device (4) comprises a sample processing device (6) for performing at least one processing step on the sample (71), wherein the sample processing device (6) comprises a receiving element (60) for receiving the analysis unit (5), so that the analysis unit (5) can be moved to the sample (71) by means of the movement device (4) in the operating state.

3. An automated laboratory apparatus according to claim 1, wherein the detector is a diode, in particular a silicon photodiode or a vacuum photodiode.

4. An automated laboratory apparatus according to claim 1 or 3, wherein the radiation source is a deuterium lamp, a tungsten lamp, a halogen lamp, or a LED.

5. An automated laboratory apparatus according to anyone of the claims 1 to 4, wherein the detection device (5) comprises a plurality of detectors and / or radiation sources.

6. An automated laboratory apparatus according to anyone of the claims 1 to 5, wherein the energy storage device is a capacitor and / or a battery and / or an accumulator.

7. An automated laboratory apparatus according to anyone of the claims 1 to 6, wherein the detection device (5) is a photometer, in particular a spectrometer, especially a fluorometer.

8. An automated laboratory apparatus according to anyone of the preceding claims, wherein the movement device (10) can be moved in a second spatial direction (y) of the treatment chamber (10), which is orthogonal to the first spatial direction, and in a third spatial direction (z) of the treatment chamber (10), which is orthogonal to the first spatial direction (x) and the second spatial direction (y).

9. An automated laboratory apparatus according to claim 2, wherein the sample processing device (6) is designed as a pipetting device (6) for receiving and dispensing a fluid and the receiving element (60) is designed for receiving a pipette tip.

10. A method of processing a sample (71) with an automated laboratory apparatus (1), comprising:
a) Providing an automated laboratory apparatus (1) according to anyone of the preceding claims;
b) Introducing the sample (71) into the treatment chamber (10);
c) Receiving the analysis unit (5) by means of the movement device (4);
d) Moving the analysis unit (5) by means of the movement device (4) through the treatment chamber (10) to the sample (71);
e) Analyzing the sample (71) by means of the analysis unit (5).

11. A method according to claim 10, wherein the movement device (4) comprises the sample processing device (6), and the wireless detection device (5) is received by means of the receiving element (60) of the sample processing device (6) and is transported by means of the movement device (4) through the treatment chamber (10) from the charging station (2) to the sample (71).

12. A method according to claim 11, comprising moving the detection device (5) by means of the movement device (4) through the treatment chamber (10) from the sample (71) to the charging station (2) after analyzing the sample (71).

13. A method according to claim 11 or 12, comprising irradiating the sample (71) with a primary radiation (51) by means of a radiation source of the detection device (5) and receiving a secondary radiation (52) originating from the sample (71) by means of a detector (51) of the detection device (5).

14. A method according to claim 13, comprising the determination of a concentration of the sample (71) based on the secondary radiation (52).

## Revendications

1. Un automate de laboratoire pour traiter un échantillon (71) comprenant une chambre de traitement (10) pour recevoir l'échantillon (71) ;
un dispositif de déplacement (4) disposé de manière mobile dans au moins une première direction spatiale (x) de la chambre de traitement (10) ;
une unité d'analyse (5) disposée dans la chambre de traitement (10) pour analyser l'échantillon (71), laquelle unité d'analyse (5) peut être reçue par le dispositif de déplacement (4) et peut être déplacée vers l'échantillon (71) au moyen du dispositif de déplacement (4) ; et
un dispositif de commande électronique (3) qui est relié par signaux au dispositif de déplacement (4) et à l'unité d'analyse (5),
dans lequel l'unité d'analyse (5) est conçue comme un dispositif de détection (5) comprenant une source de rayonnement pour irradier l'échantillon (71) avec un rayonnement primaire (51) et un détecteur pour recevoir un rayonnement secondaire (52) provenant de l'échantillon (71), **caractérisé en ce que** l'unité d'analyse (5) est conçue comme une unité d'analyse sans fil (5) avec un dispositif de stockage d'énergie, et l'automate de laboratoire (1) comprend une station de charge (2) disposée dans la chambre de traitement (10) pour stocker l'unité d'analyse (5) et pour charger le dispositif de stockage d'énergie.

2. Un automate de laboratoire selon la revendication 1, dans lequel le dispositif de déplacement (4) comprend un dispositif de traitement d'échantillon (6) pour réaliser au moins une étape de traitement sur l'échantillon (71), dans lequel le dispositif de traitement d'échantillon (6) comprend un élément de réception (60) pour recevoir l'unité d'analyse (5), de sorte que l'unité d'analyse (5) peut être déplacé vers l'échantillon (71) au moyen du dispositif de déplacement (4) à l'état de fonctionnement.

3. Un automate de laboratoire selon la revendication 1, dans lequel le détecteur est une diode, en particulier une photodiode au silicium ou une photodiode à vide.

4. Un automate de laboratoire selon la revendication 1 ou 3, dans lequel la source de rayonnement est un une lampe au deutérium, une lampe au tungstène, une lampe halogène ou une LED.

5. Un automate de laboratoire selon l'une des revendications 1 à 4, dans lequel le dispositif de détection (5) comprend une pluralité de détecteurs et/ou les sources de rayonnement.

6. Un automate de laboratoire selon l'une des revendications 1 à 5, dans lequel le dispositif de stockage d'énergie est un condensateur et/ou une batterie et/ou un accumulateur.

7. Un automate de laboratoire selon l'une des revendications 1 à 6, dans lequel le dispositif de détection (5) est un photomètre, en particulier un spectromètre, spécialement un fluoromètre.

8. Un automate de laboratoire selon l'une des revendications précédentes, dans lequel le dispositif de déplacement (10) peut être déplacé dans une deuxième direction spatiale (y) de la chambre de traitement (10), qui est orthogonale à la première direction spatiale, et dans une troisième direction spatiale (z) de la chambre de traitement (10), qui est orthogonale à la première direction spatiale (x) et à la deuxième direction spatiale (y).

9. Un automate de laboratoire selon la revendication 2, dans lequel le dispositif de traitement d'échantillon (6) est conçu comme un dispositif de pipetage (6) pour recevoir et distribuer un fluide et l'élément de réception (60) est conçu pour recevoir une pointe de pipette.

10. Un procédé de traitement d'un échantillon (71) avec un automate de laboratoire (1) comprenant :
a) Fournir un automate de laboratoire (1) selon l'une des revendications précédentes ;
b) Introduire l'échantillon (71) dans la chambre de traitement (10) ;
c) Recevoir l'unité d'analyse (5) au moyen du dispositif de déplacement (4) ;
d) Déplacer l'unité d'analyse (5) au moyen du dispositif de déplacement (4) à travers la chambre de traitement (10) vers l'échantillon (71) ;
e) Analyser l'échantillon (71) au moyen de l'unité d'analyse (5).

11. Un procédé selon la revendication 10, dans lequel le dispositif de déplacement (4) comprend le dispositif de traitement d'échantillon (6), et le dispositif de détection sans fil (5) est reçu au moyen de l'élément de réception (60) du dispositif de traitement d'échantillon (6) et est transporté au moyen du dispositif de déplacement (4) à travers la chambre de traitement (10) depuis la station de charge (2) vers l'échantillon (71).

12. Un procédé selon la revendication 11 comprenant le déplacement du dispositif de détection (5) au moyen du dispositif de déplacement (4) à travers la chambre de traitement (10) depuis l'échantillon (71) vers la station de charge (2) après avoir analysé l'échantillon (71).

13. Un procédé selon la revendication 11 ou 12 comprenant l'irradiation de l'échantillon (71) avec un rayonnement primaire (51) au moyen d'une source de rayonnement du dispositif de détection (5) et la réception d'un rayonnement secondaire (52) provenant de l'échantillon (71) au moyen d'un détecteur du dispositif de détection (5).

14. Un procédé selon la revendication 13 comprenant la détermination d'une concentration de l'échantillon (71) en utilisant le rayonnement secondaire (52).
